# EUROPEAN PATENT APPLICATION

(11) **EP 3 119 106 A1**
(43) Date of publication of application: **18.01.2017**
(21) Application number: 16174080.8
(22) Date of filing: 10.06.2016
(51) Int. Cl.: H04R 1/10, H01R 24/58, H04R 5/033, H04R 5/04

(54) **A PASSIVE AUDIO HEADSET COMPATIBLE WITH BINAURAL RECORDING AND OFF-HEADSET NOISE CANCELLATION**

(30) Priority: 18.06.2015 US 201514742992
(71) Applicant: BlackBerry Limited, Waterloo, ON N2K 0A7 (CA)
(72) Inventor: POULSEN, Jens Kristian, Kitchener, Ontario N2A 4J8 (CA); SCHWANDT, Sheldon Terry, Stratford, Ontario N5A 4R4 (CA)
(74) Representative: Moore, Barry

(57) **Abstract**

A backwards compatible passive audio headset compatible with binaural recording and off-headset noise cancellation is provided. The audio headset comprises: a first microphone; a second microphone; a first speaker; a second speaker; a ground line; and, an audio plug comprising: a barrel portion and a tip portion, the barrel portion comprising a sleeve connector, a first ring connector and a second ring connector, the tip portion comprising a tip connector and a second connector located between the tip connector and the barrel portion, each connector of the audio plug connected to one of, the first microphone; the second microphone; the first speaker; the second speaker; and a ground line, in a one-to-one relationship.

## Description

### FIELD

The specification relates generally to audio headsets, and specifically to a passive audio headset compatible with binaural recording and off-headset noise cancellation.

### BACKGROUND

In order to support active noise cancellation("ANC") in a headset, a digital signal processor ("DSP") and/or custom adaptive circuit is generally provided inside the headset and/or a special interface, in addition to an audio plug, and/or extra connectors are added to the headset to interface with a device. The DSP and/or custom adaptive circuit adds extra cost to the headset, and can necessitate a battery. The special interface is not generally compatible with devices lacking a corresponding complementary interface, nor is such a special interface compatible with in-flight audio systems. Furthermore, extra connectors of the prior art are not backwards compatible with previous generations of 3.5 mm headset sockets.

### SUMMARY

Accordingly there is an audio headset and system as detailed in the claims that follow.

### BRIEF DESCRIPTIONS OF THE DRAWINGS

For a better understanding of the various implementations described herein and to show more clearly how they may be carried into effect, reference will now be made, by way of example only, to the accompanying drawings in which:
Fig. 1 depicts a perspective view of a passive audio headset compatible with binaural recording and off-headset noise cancellation, according to non-limiting implementations.
Fig. 2 depicts a schematic block circuit diagram of the headset of Fig. 1, according to non-limiting implementations.
Fig. 3 depicts a schematic diagram that includes the audio headset of Fig. 1 and a device mated therewith, the device used for active noise cancellation ("ANC") in audio signals transmitted to speakers of the audio headset, and/or binaural recording, according to non-limiting implementations.
Fig. 4 depicts detail of an audio plug of the audio headset and an audio socket of the device of Fig. 3, according to non-limiting implementations.
Fig. 5 depicts a schematic diagram of the device of Fig. 3 determining an impedance matrix of the audio headset to determine whether the audio headset is mated therewith, according to non-limiting implementations.
Fig. 6 depicts a five-connector audio plug and relative positions of connectors of a five-connector audio socket when the five-connector audio plug is inserted therein, as well as the relative positions of the connectors of the five-connector audio socket to connectors of a four-connector audio plug and a three-connector audio plug, according to non-limiting implementations.

### DETAILED DESCRIPTION

In general, this disclosure is directed to an audio headset that includes an audio plug with five-connectors, three-connectors on a barrel portion and two connectors on a tip portion, a tip connector located at the end of the audio plug, and a second connector, at the tip portion, located between the tip connector and the barrel portion. The three connectors on the barrel portion and the second connector on the tip portion are located at positions that are compatible with existing four-connector audio sockets; hence, complementary five-connector sockets, configured to receive the five-connector audio plug, are backwards compatible with existing four-connecter audio plugs and existing three-connector audio plugs. Hence, the present audio plug has an additional connector, located at the tip portion, compared to four-connector audio plugs. The additional connector can be connected to a second microphone of the present audio headset, which includes two microphones and two speakers, as compared to previous audio headsets with four-connector plugs that include only one microphone. The two microphones of the present audio headset can provide binaural recording capabilities at a device connected to the audio headset that includes a five-connector socket, and/or active noise cancellation ("ANC") for both speakers of the present audio headset (presuming that each of the speakers is proximal a respective microphone). In particular, the ANC processing can occur at a connected device that receives both microphone signals, and produces one or more noise cancellation signals that are inserted into sound data output to the speakers. Hence, the ANC processing occurs at the device, rather than the audio headset, which reduces the cost of the audio headset by obviating the need for a processor at the audio headset to produce the noise cancellation signals.

In this specification, reference may be made herein to the terms program material, sound data and audio data which can refer to data used to drive a speaker and/or a loudspeaker including, but not limited to, voice data, music data, video data, and the like. In other words program material, sound data and audio data as used interchangeably herein can refer to sound data and/or sound files which can be processed to produce an input signal to a loudspeaker and/or a speaker. In some instances, the terms program material, sound data and audio data, however, will be used colloquially and interchangeably with the terms input signal and output signal, signifying that the program material, sound data and/or audio data is used to produce an input signal to a loudspeaker and/or an output signal that drives the loudspeaker, the output signal comprising an altered version of the input signal.

In addition, the audio plugs described herein can also be referred to as audio jacks and/or as male connectors and/or as male audio jacks and/or as male audio plugs. Similarly, audio sockets described herein can also be referred to as audio ports and/or as female connectors and/or as female audio ports and/or as female audio sockets.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, ZZ, and the like). Similar logic can be applied for two or more items in any occurrence of "at least one ..." and "one or more..." language.

An aspect of the specification provides an audio headset comprising: a first microphone; a second microphone; a first speaker; a second speaker; a ground line; and, an audio plug comprising: a barrel portion and a tip portion, the barrel portion comprising a sleeve connector, a first ring connector and a second ring connector, the tip portion comprising a tip connector and a second connector located between the tip connector and the barrel portion, each connector of the audio plug connected to one of: the first microphone; the second microphone; the first speaker; the second speaker; and a ground line, in a one-to-one relationship plug.

The tip connector can comprise a tip of the audio plug.

The second connector of the tip portion can comprise a third ring connector.

The audio plug can comprise a 3.5 mm audio plug.

The audio plug can comprise a 2.5 mm audio plug.

The audio headset can further comprise at least one input device configured to control one or more: of volume of the first speaker and the second speaker; muting of the first microphone and the second microphone; and a push-to-talk function.

The audio headset can further comprise at least one input device configured to short one or more of the first microphone and the second microphone to the ground line in a playback-in-flight mode.

The ground line can be shared by each of: the first microphone; the second microphone; the first speaker; and the second speaker.

The sleeve connector can be connected to a right microphone; the first ring connector can be connected to a right speaker; the second ring connector can be connected to the ground line; the tip connector can be connected to a left microphone; and the second connector can be connected to a left speaker.

The sleeve connector can be connected to the ground line; the first ring connector can be connected to the one of the first speaker and the second speaker; the second connector can be connected to the other of the first speaker and the second speaker; the second connector, located between the tip connector and the barrel portion, can be connected to one of the first microphone and the second microphone; and the tip connector can be connected to the other of the first microphone and the second microphone.

The audio headset can further comprise a memory storing respective acoustic transfer functions between the first microphone and a closest one of the first speaker and the second speaker, and the second microphone and a respective closest one of the first speaker and the second speaker. The memory can be accessible via one or more of the connectors of the audio plug such that the respective acoustic transfer functions are stored at the memory from an external device via the audio plug.

The audio headset can further comprise a memory storing one or more of a respective identification number, a manufacturer type, and intended use and compatibility of the audio headset with equipment associated with a specific airline.

Another aspect of the specification provides a system comprising: an audio headset comprising: a first microphone; a second microphone; a first speaker; a second speaker; a ground line; and, an audio plug comprising: a barrel portion and a tip portion, the barrel portion comprising a sleeve connector, a first ring connector and a second ring connector, the tip portion comprising a tip connector and a second connector located between the tip connector and the barrel portion, each connector of the audio plug connected to one of: the first microphone; the second microphone; the first speaker; the second speaker; and a ground line, in a one-to-one relationship; and, a device comprising: a socket configured to receive the audio plug, the socket comprising respective connectors configured to respectively connect to the connectors of the audio plug; and a digital signal processor ("DSP") configured to one or more of: process a binaural audio received from the first microphone and the second microphone and converted by a codec; and behave as an active noise cancellation ("ANC") unit to process audio data from the first microphone and the second microphone to produce a noise cancellation signal, and insert the noise cancellation signal into sound data output to the first speaker and the second speaker.

The device can comprise a mobile electronic device.

The device can comprise a component of an airline entertainment system.

The device can further comprise a processor configured to determine when the audio plug is received in the socket.

The device can further comprise a processor configured to: measure one or more impedance values between any two or more of the respective connectors of the socket; and determine that the audio plug is received in the socket when the one or more impedances meet a threshold impedance condition.

The audio plug can comprise a male connector, and the socket can comprise a female five-pole socket configured to receive the male connector.

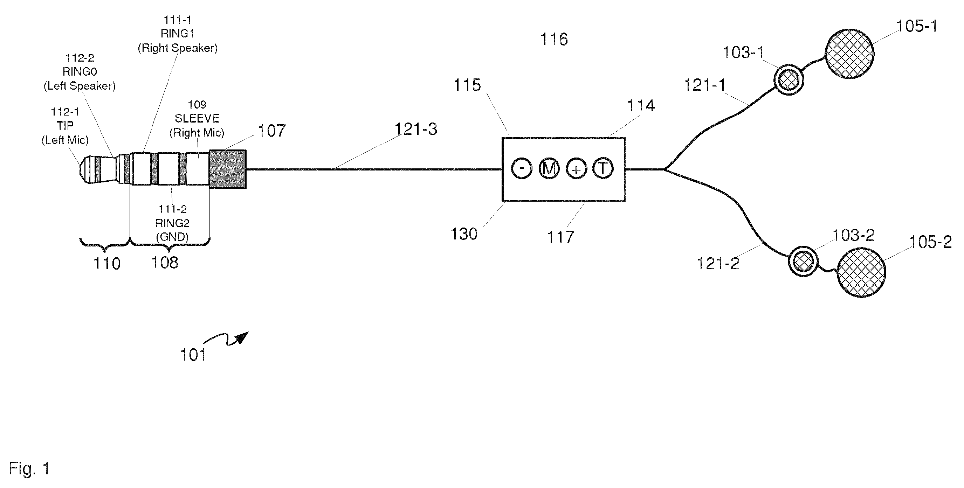

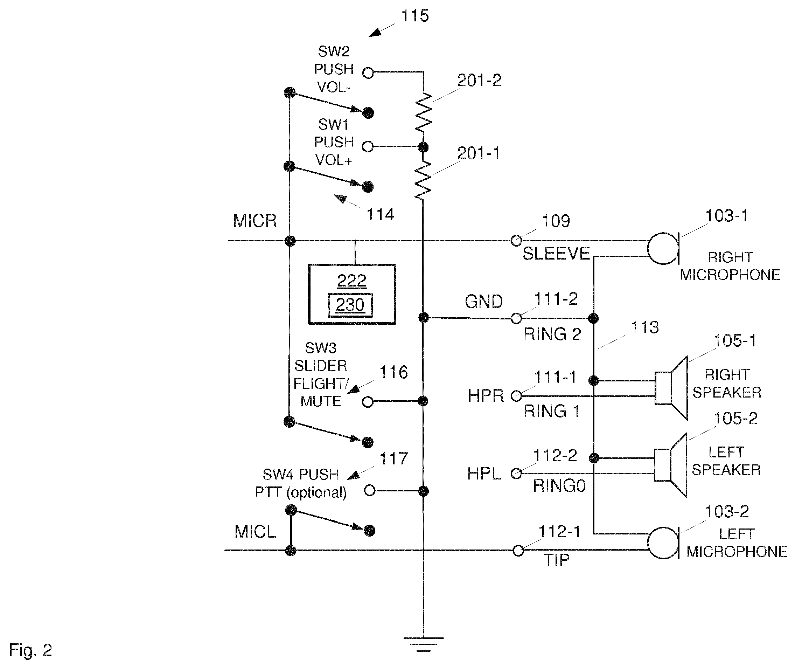

Attention is next directed to Fig. 1 and Fig. 2 which respectively depict a perspective view and a schematic diagram of an audio headset 101, referred to interchangeably hereafter as headset 101, according to non-limiting implementations. Headset 101 comprises: a first microphone 103-1; a second microphone 103-2; a first speaker 105-1; a second speaker 105-2; a ground line 113; and, an audio plug 107 comprising: a barrel portion 108 and a tip portion 110, barrel portion 108 comprising a sleeve connector 109, a first ring connector 111-1 and a second ring connector 111-2, tip portion 110 comprising a tip connector 112-1 and a second connector 112-2 located between tip connector 112-1 and barrel portion 108, each connector 109, 111-1, 111-2, 112-1, 112-2 of audio plug 107 connected to one of: first microphone 103-1; second microphone 103-2; first speaker 105-1; second speaker 105-2; and ground line 113, in a one-to-one relationship. First microphone 103-1 and second microphone 103-2 will be interchangeably referred to hereafter, collectively, as microphones 103, and generically as a microphone 103. Similarly, first speaker 105-1 and second speaker 105-2 will be interchangeably referred to hereafter, collectively, as speakers 105, and generically as a speaker 105. Similarly, ring connector 111-1 and second ring connector 111-2 will be interchangeably referred to hereafter, collectively, as connectors 111, and generically as a connector 111; and tip connector 112-1 and second connector 112-2 will be interchangeably referred to hereafter, collectively, as connectors 112, and generically as a connector 112. Furthermore, connectors 109, 111, 112 are depicted in white, with insulating material there between depicted in grey.

In general, headset 101 can be used with an audio device that plays program material, sound data and audio data, and outputs audio signals to an audio socket of an external device, which can be mated with audio plug 107, so that the audio signals can be used to drive speakers 105; furthermore, microphones 103 can be used to convey audio signals to the external device for use in telephony and the like and/or for ANC use and/or binaural recordings, as described in further detail below.

In particular, as described below, signals can be received independently from each of microphones 103 at the audio device mated with audio plug 107, which can process and/or record the signals binaurally, and/or process the microphone signals to produce a noise cancellation signal, which can be combined with sound data output to the first speaker and the second speaker.

In particular, as depicted, each of microphones 103 are adjacent and/or proximal to a respective speaker 105; for example, as depicted, microphone 103-1 is adjacent and/or proximal to speaker 105-1, and microphone 103-2 is adjacent and/or proximal to speaker 105-2. As such, a signal from microphone 103-1 can used to produce a noise cancellation signal for speaker 105-1, and a signal from microphone 103-2 can used to produce a noise cancellation signal for speaker 105-2.

While, as depicted, each of microphones 103 are depicted as being separate from speakers 105, in other implementations respective microphones 103 can be integrated with respective speakers 105. Indeed, a wide variety of physical configurations of microphones 103 and speakers 105 are within the scope of present implementations.

Furthermore, connectors, 111, 109, 112-2 can be located at positions similar to connectors on a four-connector audio plug such that a complementary audio socket is backwards-compatible with four-connector audio plugs, as described in more detail below. Connector 112-1 comprises a tip of audio plug 107; when connector 112-1 is connected to an audio device (i.e. when audio plug 107 is mated with a complementary audio socket) it is assumed that a five-connector audio socket in a compatible audio device includes a corresponding connector configured to connect to connector 112-1.

As depicted: connector 109 (also labelled "SLEEVE" in Fig. 1)comprises a sleeve connector connected to microphone 103-1 which, as depicted, comprises a right microphone; connector 111-1 comprises a ring connector (also labelled "RING1" in Fig. 1) connected to speaker 105-1 which, as depicted, comprises a right speaker; connector 112-1 (also labelled "TIP" in Fig.) comprises a tip of audio plug 107, and is connected to microphone 103-2 which, as depicted, comprises a left microphone; connector 112-2 comprises a ring connector (also labelled "RING0" in Fig. 1) connected to speaker 105-2 which, as depicted, comprises a left speaker; and, connector 111-2 comprises a ring connector (also labelled "RING2" in Fig. 1) connected to ground line 113. For example, second connector 112-2 of tip portion 110 comprises a third ring connector (i.e. in addition to first ring connector 111-1 and second ring connector 111-2).

Fig. 2 further depicts circuits within headset 101. For example, ground line 113 is shared by each of: first microphone 103-1; second microphone 103-2; first speaker 105-1; and second speaker 105-2. However, other configurations of circuits within audio headset 101 are within the scope of present implementations and the circuit of Fig. 2 is provided as an example only. For example, other circuits can be used to connect the five-connector audio plug 107 to two microphones 103 and two speakers 105. In some implementations, second microphone 103-2 can be connected to connector 109 and first microphone 103-1 can be connected to connector 112-1 instead of as depicted. Alternatively, connector 111-2 can be used as a microphone signal line and connector 109 can be be used as a ground return signal line.

Headset 101 can be used with external audio devices that can include one or more of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, MP3 players, electronic audio players, and the like, as well as in-flight entertainment systems as often provided in airplanes. Furthermore, headset 101 is generally backwards-compatible with such devices and systems.

As depicted, headset 101 comprises a 3.5 mm audio headset, and hence audio plug 107 comprises a 3.5 mm audio plug; however, other types of headsets and/or audio plugs are within the scope of present implementations, including, but not limited to a 2.5 mm audio plug. In other words, the physical dimensions of audio plug 107 are the same as the physical dimensions of four-connector audio plugs, for example a 3.5 mm four-connector audio plug or a 2.5 mm four-connector audio plug, and/or three-connector audio plugs, for example a 3.5 mm three-connector audio plug or a 2.5 mm three-connector audio plug.

Similarly, locations (and physical dimensions) of connectors 109, 111 on barrel portion 108 are located at similar positions of respective connectors of four-connector audio plugs and/or four-connector audio sockets, and connector 112-2 (e.g. "RING0") is located to connect with a similarly located connector in a four-connector audio socket. As such, connector 112-1, located at a tip of audio plug 107, is in addition to the connectors of four-connector audio plugs and/or audio sockets. Put another way, the tip connector of a four-connector audio plug is bifurcated in present implementations to provide both tip connector 112-1 and second connector 112-2 at tip portion 110.

Fig. 1 further depicts locations of connectors 109, 111, 112 of audio plug 107, presuming audio plug 107 comprises a 3.5 mm audio plug, and further presuming that the 3.5 mm audio plug conforms to a North American Standard. In particular, connector 109 comprises a "SLEEVE" connector of the 3.5 mm audio plug which is connected to a right microphone (e.g. microphone 103-1); connector 111-1 comprises a "RING1" connector of the 3.5 mm audio plug, which is connected to a right speaker (e.g. speaker 105-1); connector 111-2 comprises a "RING2" connector and/or a ground connector (also labelled "GND" in Figs. 1 and 2), which is connected to ground line 113; connector 112-1 comprises a "TIP" connector of the 3.5 mm audio plug , which is connected to a left microphone (e.g. microphone 103-2) and further connector 112-1 encompasses a tip of audio plug 107; and second connector 112-2 comprises a "RING0" connector of the 3.5 mm audio plug, which is connected to a left speaker (e.g. speaker 105-2).

In other implementations, for example when audio plug 107 conforms to a European standard: sleeve connector 109 is connected to ground line 113; first ring connector 111-1 is connected to one of first speaker 105-1 and second speaker 105-2; second connector 112-2 is connected to the other of first speaker 105-1 and second speaker 105-2; second ring connector 111-2 is connected to one of first microphone 103-1 and second microphone 103-2; and tip connector 112-1 is connected to the other of first microphone 103-1 and second microphone 103-2. In other words, in these implementations, the functionality of connectors 109, 111-2 are reversed as compared to when audio plug 107 conforms to a North American standard.

Microphones 103 comprise right and left microphones, each connected to a respective connector 109 (or 111-2 in European Standard), 112-1 of audio plug 107, and can be used to receive sounds from a user, for example as the user speaks into microphones 103, and the sound can be converted by microphones 103 to audio signals (e.g. electric audio signals and/or electronic audio signals) which can be conveyed to a device mated with headset 101. Alternatively, respective locations of microphones 103 can be selected so that each of microphones 103 receive background noise for a respective speaker 105, the background noise being conveyed to an audio device mated with the headset to produce noise cancellation signals therefrom. In particular, as there are two microphones 103, binaural sounds can be received at the device, for recording and/or for processing into automatic noise cancellation signals.

Speakers 105 comprise right and left speakers, each connected to a respective connector 111-1, 112-2 of audio plug 107. Each speaker 105 can comprise one or more of an over-ear speaker, an on-ear speaker and in-ear speaker. In some implementations speakers 105-1, 105-2 can comprise distinct speaker components, a single speaker device; for example, speakers 105-1, 105-2 can each comprise different speaker devices, including, but not limited to, each comprising the combination of a tweeter and a woofer.

As depicted, audio headset 101 further comprises one or more input devices 114, 115, 116, 117 configured to control one or more: of volume of first speaker 105-1 and second speaker 105-2; muting of first microphone 103-1 and second microphone 103-2; and a push-to-talk function. In particular, one or more input devices 114, 115, 116, 117 can be used to control volume of speakers 105, mute microphones 103 and/or control playing of audio files and the like at a device with which headset 101 is mated.

For example, input device 116 is configured to short one or more of first microphone 103-1 and second microphone 103-2 to ground line 113, for example in a playback-in-flight mode and/or connected to an audio device and the like.

In some implementations, one of input devices 114, 115, 116, 117 (e.g., as depicted input device 117) can be used to activate a push-to-talk (PTT) functionality. In general, actuation of an input device 114, 115, 116, 117 can be detected by a connected audio device, for example by the audio device detecting impedance changes within audio headset 101, and respond accordingly. For example, as depicted in Fig. 2, audio headset 101 comprises resistors 201-1, 201-2 which, when one of input devices 114, 115 are actuated, cause a change of impedance on the microphone lines of microphones 103. However, headset 101 can be adapted to include tone and/or test pulse generation components that produce tones and/or test pulses when one or more of input devices 114, 115, 116, 117 are actuated, the tones conveyed to a mated audio device to control audio functionality of the audio device. In some implementations, such tones and/or test pulses can be outside an audible hearing range of human beings, and hence be inaudible to human beings.

As depicted, each of input devices 114, 115, 116, 117 comprise a respective actuatable switch, however other types of input devices are within the scope of respective implementations.

In other implementations, headset 101 can comprise further input devices, which can be similar or different from input devices 114, 115, 116, 117; in yet further implementations, headset 101 can further comprise one or more indicator output devices including, but not limited to, one or more displays, LEDs (light emitting diodes) and/or other types of indicator output devices.

As described above, input devices 114, 115, 116, 117 each comprise an actuatable switch (indicated as SW1, SW2 and SW3 in Fig. 2), which can be implemented as a button, a push button, a slider switch, and the like, mounted in a chassis 130 (as depicted in Fig. 1) and the like. As depicted, input device 114 comprises a volume increase push button, input device 115 comprises a volume decrease push button, input device 116 comprises a flight/mute switch, and input device 117 comprises a push-to-talk button. Furthermore, while headset 101 comprises four input devices 114, 115, 116, 117 in other implementations, headset 101 can comprise fewer than four input devices and more than four input devices, with headset 101 adapted accordingly. The flight/mute switch can be implemented using a slider switch (as depicted) or a locking switch for in-cabin flight applications; in other words, such a slider switch provides backwards compatibility of the present five-connector audio plug 107 to three-connector audio sockets, where shorting of connectors 109, 111-2 can provide a stable ground connection.

It is further appreciated that headset 101 comprises audio cables 121-1, 121-2 connecting microphones 103 and speakers 105 to other components of headset 101, as well as an audio cable 121-3 connecting audio plug 107 to other components of headset 101. Indeed, audio cables 121-1, 121-2, 121-3 comprise other electrical lines within the schematic diagram shown in Fig. 2; for example cables 121-1, 121-2, 121-3 can comprise microphone lines, speaker lines and ground line 113. While not depicted headset 101 can comprise EMI (electromagnetic interference) filtering components, including, but not limited to, capacitors, inductors, ferrite beads, resistors, and the like. In some implementations, microphones 103 and speakers 105 can share the same ground line (e.g. ground line 113) inside audio cable 121-3, while in other implementations, a separate respective ground line can be used for each microphone 103 and each speaker 105 with each separate respective ground line connected to and/or merged at connector 111-2. Such separate ground lines can result in lowered crosstalk between signals.

As depicted in Fig. 2, headset 101 comprises an optional memory 222 connected to the right microphone line, memory 222 optionally storing respective acoustic transfer functions 230 between first microphone 103-1 and a closest one of first speaker 105-1 and second speaker 105-2 (e.g., as depicted first speaker 105-1 is closest to first microphone 103-1), and second microphone 103-2 and a respective closest one of first speaker 105-1 and second speaker 105-2 (e.g., as depicted second speaker 105-2 is closest to second microphone 103-2). In general, when present, memory 222 is accessible via one or more of connectors 109, 111, 112 of audio plug 107 such that the respective acoustic transfer functions 230 stored at memory 222 are accessible from an external device via audio plug 107. For example, as depicted memory 222 is accessible via connector 109, though in other implementations, memory 222 can be accessible via another connector 111, 112. Furthermore, a device connected to headset 101 can determine acoustic transfer functions 230 based on audio data received from microphones 103, and upload acoustic transfer functions 230 to memory 222, for example via connector 109. In general, memory 222 comprises one or more of a flash memory, a non-volatile memory, a non-transitory memory, a memory unit and/or a memory module, and acoustic transfer functions 230 are stored persistently. For example, when headset 101 is mated with a new device, the new device can read acoustic transfer functions 230 and process sound data and microphone data received from headset 101 accordingly, and/or update acoustic transfer functions 230.

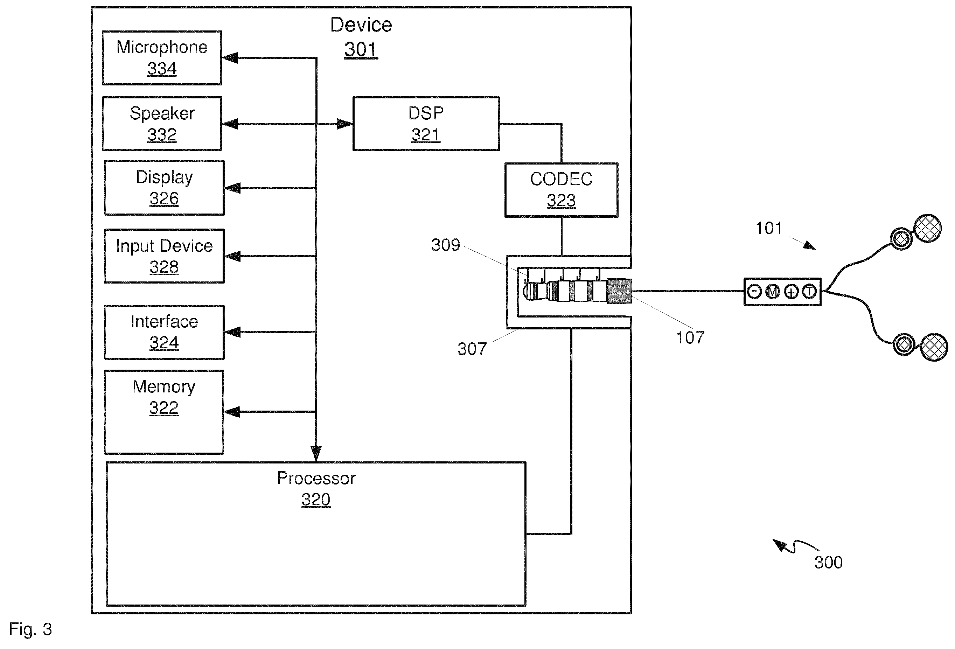

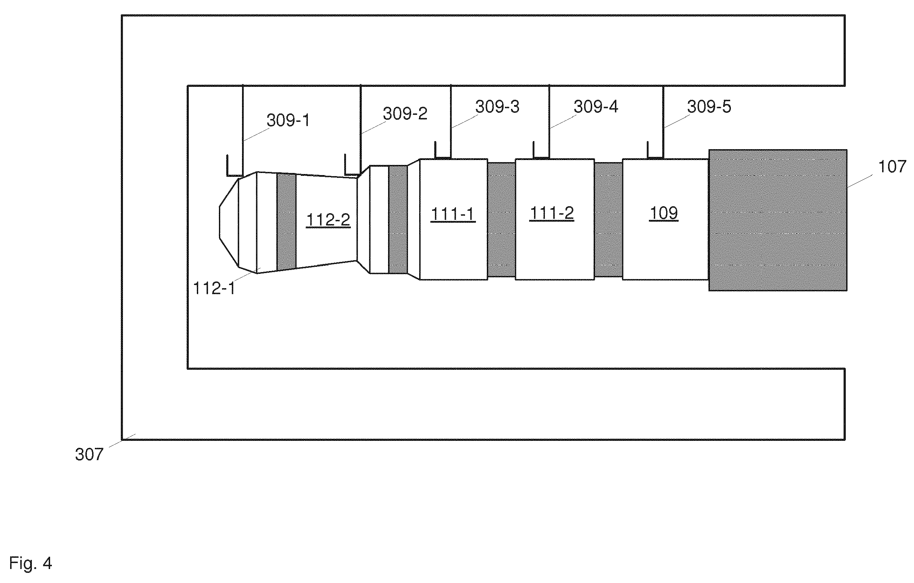

Attention is next directed to Figs. 3 and 4 which respectively depict a system 300, and detail of system 300. System 300 comprises headset 101 and a device 301. Device 301 comprises: a socket 307 configured to receive audio plug 107, socket 307 comprising respective connectors 309-1, 309-2, 309-3, 309-4, 309-5 configured to respectively connect to connectors 112-1, 112-2, 111-1, 111-2, 109 of audio plug 107; a codec 323 configured to receive signals from microphones 103 and transmit signals to speakers 105 and a digital signal processor ("DSP") 321 configured to one or more of: process a binaural audio received from first microphone 103-1 and second microphone 103-2, the binaural audio converted by codec 323; and behave as an active noise cancellation ("ANC") unit to process audio data from first microphone 103-1 and second microphone 103-2 to produce a noise cancellation signal, and insert the noise cancellation signal into sound data output as transmitted by codec 323 to first speaker 105-1 and second speaker 105-2. As depicted audio plug 107 comprises a male connector, and socket 307 comprises a female five-pole connector configured to receive the male connector. While not all elements of headset 101 are numbered in Fig. 3 for clarity, they are appreciated to be nonetheless present. Furthermore codec 323 can be implemented as hardware element of device 301; in particular, codec 323 can be a component of DSP 321 and/or processor 320. In some implementations, the ANC can be performed inside a custom adaptive circuit instead of using a DSP and, in some implementations a purely analog or switched analog circuit can be used for the ANC operation.

Furthermore, only one of connectors 309-1, 309-2, 309-3, 309-4, 309-5 are numbered, as connector 309 in Fig. 3 for clarity, with each of connectors 309-1, 309-2, 309-3, 309-4, 309-5 numbered in Fig. 4; hence connectors 309-1, 309-2, 309-3, 309-4, 309-5 are collectively referred to hereafter as connectors 309 and generically as a connector 309. Furthermore, while not depicted, one or more of codec 323, DSP 321 and processor 320 is independently in communication with each of connectors 309.

Audio socket 307 generally comprises an aperture and respective connectors 309, which can each comprise audio socket spring connectors, and the like. In general, audio plug 107 and audio socket 307 are configured to mate with one another. Specifically, connectors 309-1, 309-2, 309-3, 309-4, 309-5 are configured to mate with corresponding connectors 112-1, 112-2, 111-1, 111-2, 109 of audio plug 107 in a one-to-one relationship.

Each of connectors 309 can comprise an audio socket spring connector, and the like, configured to connect to a respective connector 109, 111, 112 of audio plug 107 when audio plug 107 is mated with socket 307. In particular, each of connectors 309 is substantially similar to connectors used in 3.5 mm audio sockets and/or connectors used in 2.5 mm audio sockets. In particular, each of connectors 309-2, 309-3, 309-4, 309-5 are located within socket 307 at a similar position as connectors in a four-connector audio socket, with connector 309-1 located to connect with tip connector 112-1 when audio plug 107 is mated with socket 307. Hence, when a four-connector audio plug is mated with socket 307, connectors 309-2, 309-3, 309-4, 309-5 mate with corresponding connectors of the four-connector audio plug; therefore, five-connector audio socket 307 is backwards compatible with four-connector audio plugs, and similarly with three-connector audio plugs. In particular, as described in more detail below, device 301 is generally configured to determine a type of audio plug being received at audio socket 307, and configure data and/or electrical signals transmitted and/or received at each of connectors 309 accordingly. For example, when a four-connector audio plug is received at audio socket 307, device 301 can determine that connectors 309-1, 309-2 are shorted together and configure output to connectors 309-1, 309-2 accordingly. In this way, the insertion of an audio plug may be detected by the finite impedance between connectors 309-1, 309-2. In alternative implementations, socket 307 can comprise a contact that can be opened or closed inside socket 307 when an audio plug (such as plug 107) is inserted, the opening or closing occurring due to mechanical force, and thereby used to detect the insertion or removal of an audio plug.

Furthermore, as depicted, device 301 comprises a mobile electronic device which can include, but is not limited to, one or more of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, MP3 players, electronic audio players, and the like.

In particular implementations, device 301 can comprise a component of an airline entertainment system, for example, a device which outputs sound to headset 101, with socket 307 located in an armrest of an airplane seat, and the remaining components being located in the armrest itself and/or in one or more of the airplane seats and/or in an in-flight entertainment system. In other implementations, socket 307 can be located in another physical position different from the armrest, the other physical location being in proximity and/or close proximity to a passenger seat and/or an in-flight entertainment system.

As depicted, device 301 further comprises a processor 320 in communication with connectors 309 of audio socket 307, a memory 322, a communication interface 324 (interchangeably referred to hereafter as interface 324), an optional display 326, an input device 328, an optional speaker 332, and an optional microphone 334. While not depicted, device 301 can further comprise a power supply.

It should be emphasized that the shape and structure of device 301 as depicted in Fig. 3 is purely an example, and contemplates a device that can be used for both wireless voice (e.g. telephony) and wireless data communications (e.g. email, web browsing, text, and the like). However, Fig. 3 further contemplates a device that can be used for any suitable specialized functions, including, but not limited, to one or more of, telephony, computing, appliance, and/or entertainment related functions. In particular, device 301 can be adapted for use as a component in an in-flight entertainment system.

While codec 323, DSP 321 and processor 320 are depicted as separate components of device 301, in other implementations, codec 323, DSP 321 and processor 320 can be combined into a single processor and/or implemented as multiple processors. In particular, each of codec 323, DSP 321 and processor 320 comprise hardware processors and/or hardware components. Indeed, codec 323, DSP 321 and/or processor 320 can be implemented as a plurality of processors, including but not limited to one or more central processors (CPUs)). Codec 323, DSP 321 and/or processor 320 can further comprise one or more hardware processors. Codec 323, DSP 321 and/or processor 320 are configured to communicate with memory 322. Memory 322 can comprise a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 301 as described herein are typically maintained, persistently, in memory 322 and used by codec 323, DSP 321 and/or processor 320 which make appropriate utilization of volatile storage during the execution of such programming instructions. Those skilled in the art will now recognize that memory 322 is an example of computer readable media that can store programming instructions executable using codec 323, DSP 321 and/or processor 320, and in particular a non-volatile computer readable medium. Furthermore, memory 322 is also an example of a memory unit and/or memory module.

In particular, DSP 321 and/or processor 320 can be configured to one or more of: process a binaural audio received from first microphone 103-1 and second microphone 103-2; and behave as an active noise cancellation ("ANC") unit to process audio data from first microphone 103-1 and second microphone 103-2 to produce a noise cancellation signal, and insert the noise cancellation signal into sound data output to first speaker 105-1 and second speaker 105-2.

DSP 321 and/or processor 320 can be further configured to determine when audio plug 107 is received in socket 307, for example by determining a change in impedance across one or more of connectors 309.

For example, DSP 321 and/or processor 320 can be configured to: measure an impedance between at least two of connector 309, for example connectors corresponding to tip connector 112-1 and second connector 112-2 of tip portion 110; and determine that audio plug 107 is received in socket 307 when the impedance meets a threshold impedance condition, for example, when the measured impedance is similar to an impedance associated with speaker 105-2 and/or microphone 103-2 and/or below a given threshold impedance(e.g. about 40kΩ).

In particular, headset 101 can be modelled mathematically as an impedance matrix that is connected to socket 307. The contents of this matrix can be determined by DSP 321 and/or processor 320 of device 301 performing a series of voltage or current measurements of respective connectors 309, based on voltage or current stimuli, in any suitable combination to perform impedance measurements of headset 101 and/or any other accessory connected to socket 107. In some implementations, the impedance measurements can be based on linear measurements, while in other implementations the measurements can be based on different current and/or voltage stimuli, configured to detect nonlinearities in impedance.

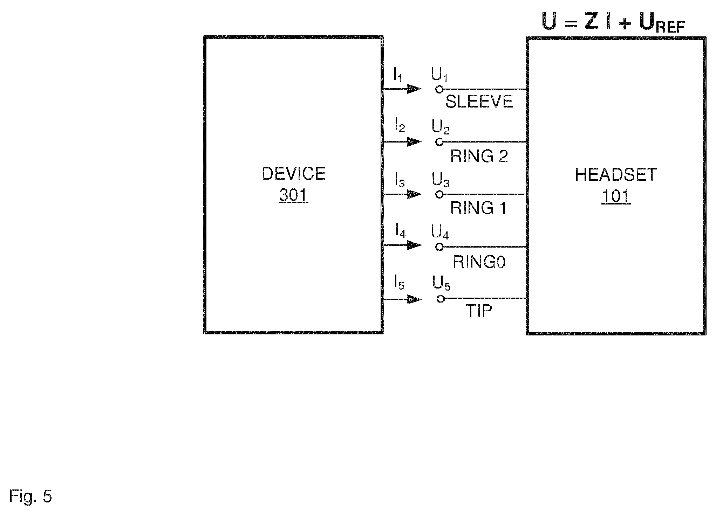

For example, with reference to Fig. 5, which schematically depicts device 301 determining elements U1, U2, U3, U4, U5 (which can also be referred to as voltage nodes) of an impedance matrix Z by measuring impedance on each of connector 309 corresponding to connectors 109, 111, 112 (indicated as SLEEVE (U1), RING2 (U2), RING1 (U3), RING0 (U4), TIP (U5) in Fig. 4). The impedance matrix can then be represented by U=Z I+Uref, where U is the voltage nodes, Uref is a reference voltage, I is the currents (e.g. current vectors) and Z is the impedance matrix, which can be used for modelling binaural headsets. In particular, the impedance matrix can be represented as follows, assuming the reference voltage is zero:

| | | | | | | | |
|---|---|---|---|---|---|---|---|
| U₁ | | Z_{MIC1} | 0 | 0 | 0 | | I₁ |
| U₂=0 | | 0 | 0 | 0 | 0 | | I₂ |
| U₃ | = | 0 | Z_{SPKR} | 0 | 0 | | I₃ |
| U₄ | | 0 | 0 | Z_{SPKL} | 0 | | I₄ |
| U₅ | | 0 | 0 | 0 | Z_{MIC2} | | I₅ |

This assumes that the ground connection on RING2 (connector 111-2) is set to 0 volts (i.e. U2=0), and that test currents are applied to the remaining connectors 309 (corresponding to connectors 109 (SLEEVE, U1), 111-1 (RING1, U3), 112-2 (RING0, U4), 112-1 (TIP, U5) by device 301 to measure the resulting voltages. RING2 (connector 111-2) (i.e. U2=0 in the impedance matrix) can comprise a return path for the currents. Hence, -I₂=I₁+I₃+I₄+I₅ using Kirchoffs law.

Insertion of plug 107 into socket 307 can be determined by measuring the impedance between the respective connectors 309 corresponding to the TIP and RING2 connectors (e.g. respectively, connector 309-1 corresponding to TIP/connector 112-1, connector 309-4, corresponding to RING2/connector 111-2) in order to find the impedance Z_{MIC2}. This can be performed by grounding connector 309-4 and applying a voltage on connector 309-1 using a voltage generator of device 301 with a high output impedance (which can be in a range of about 10 to about 100kΩ) and measuring the voltage on connector 309-1 while floating all other connectors 309 except connector 309-4. Hence, when a five-connector audio plug (e.g. audio plug 107) is received at socket 307, the voltage at connector 309-1 will decrease substantially due to the microphone impedance Z_{MIC2} to ground; and, when a three-connector audio plug or a four-connector audio plug is received at socket 307, connector 309-1 will be connected to ground through the left speaker impedance Z_{SPKL} thereby changing the measured voltage on connector 309-1. It is appreciated, that while the voltage may be low on connector 309-1 when a microphone is present, the voltage will be substantially larger (e.g. in the range 40-200mV depending on the output impedance of the pulse generator and the specific microphone type) than when inserting a three-connector or four-connector audio plug

(which can be less than e.g. 20mV, depending on the output impedance on of the pulse generator used) due to the lower impedance of a speaker (which can be in a range about 12 to about 100Ω). Therefore, it is possible to reliably distinguish between fully inserted three, four and five-connector audio plugs and situations where they are not fully inserted or present at all.

In other implementations, the respective connectors 309 corresponding to one of U4 or U5 can be set to 0 Volts (e.g. respectively connector 309-2 or connector 309-1) and a current or voltage source can be applied to the other of the connectors corresponding to U4 or U5 , thereby forcing a current through the impedance determined by (Z_{SKL}+Z_{MIC2}) when connecting five-connector audio plug 107. This can be used as an alternate method of determining the inserting and removal of an audio plug. An advantage of measuring the insertion at connector 309-1 is that this will first be detected when an audio plug is fully inserted into socket 307 and therefore, other values in the impedance matrix Z can reliably be measured when a finite impedance is detected at connector 309-1 without to introducing long and arbitrary delays in the measurements to wait for the audio plug to be fully inserted. Inaudible detection can be achieved by spectrally shaping the detection pulses so they have a spectral energy content below the human hearing threshold, e.g. by high pass filtering the detection pulses. When the five-connector audio plug 107 is received at socket 307, a current will flow through the left microphone (e.g. MIC2) and the change can be measured. When a standard three-connector plug or four-connector plug is received and/or mated at socket 307, the respective connectors 309 corresponding to points RING0 and TIP (e.g. the left speaker and the left microphone connectors) will be directly connected, which can also be measured.

In the general case, any combination of applied current or voltages can be chosen and the corresponding change in voltage or current can be measured. Furthermore, a combination of shaped voltage and current waveforms can be selected such that the testing is inaudible through speakers 105. As an example, a voltage source with output voltage of 2.7V and output impedance of 40 kΩ may be applied to the respective connector 309-1, while the respective connector 309-4 is fixed at 0 Volts. Due to the nonlinear characteristics of microphones and limited impedance of a speaker, the resulting voltage (U5) at connector 309-1 can be measured to be less than 200mV when a three-connector plug, a four-connector or a five-connector plug is inserted at socket 307, while U5 is equal to approximately 2.7V when nothing is inserted (assuming a sufficiently high input impedance of a measurement apparatus). Hence, a simple and effective method for checking for plug insertion is provided. In some embodiments, the output impedance of the voltage source applied to the respective connectors 309-1, 309-2 (corresponding to the TIP or RING0 connectors) can be higher than (the aforementioned) 40 kΩ in order to decrease power consumption during detection. In some cases the detection can be based on sending out short pulses and decreasing the duty cycle to lower the power consumption.

It is further noted that the matrix depicted above corresponds to a North American standard; when a European standard is applied, the matrix and measurements will be adapted accordingly.

Furthermore, other methods can be used to detect insertion of an accessory at audio socket 307, including methods disclosed in Applicant's co-pending applications regarding detection and inaudible detection: US Application Number 13/756,979 (published as US Publication number: 20140219463 and equivalently published as European Publication number EP2763433) entitled "Apparatus, Systems And Methods For Inaudibly Identifying An Accessory Using Spectral Shaping", incorporated herein by reference; and, US Application Number 13/777,942 (published as US Publication Number 20140241535), entitled "Apparatus, Systems And Methods For Detecting Insertion Or Removal Of An Audio Accessory From An Electronic Device", incorporated herein by reference.

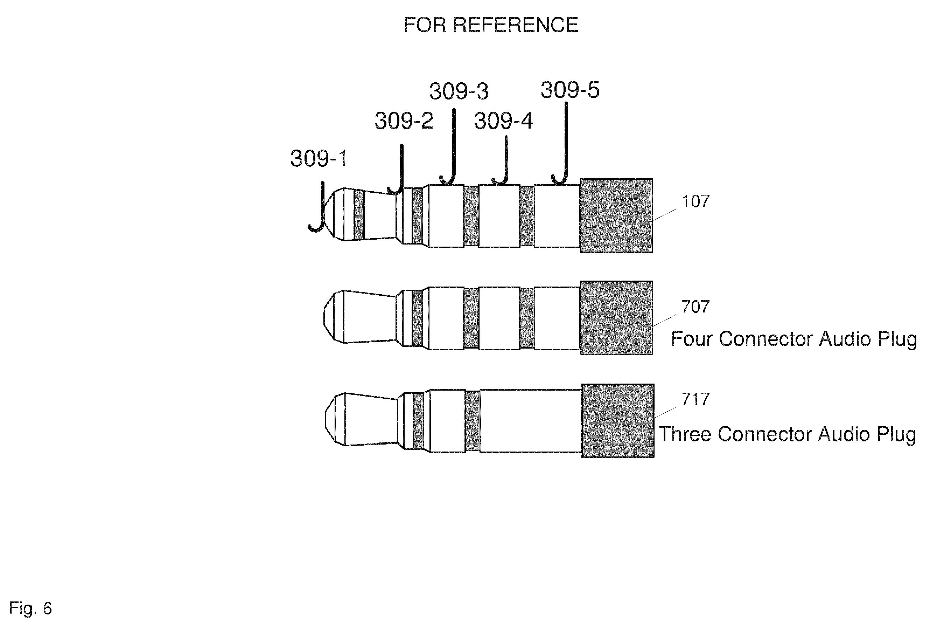

Hence, in general, headset 101 can be used with devices that receive signals from microphones 103 and process the signals to provide ANC features, such that ANC processing does not occur at headset 101. Hence, use of processors and batteries at headset 101 to produce an ANC feature is obviated. Furthermore, as the four of the five-connectors 109, 111, 112 are positioned similar to corresponding connectors of conventional four-connector audio plugs, headset 101 is backwards compatible with four-connector audio sockets. For example, attention is directed to Fig. 6 which depicts a five-connector audio plug 107 as described herein and positions of connectors 309 of socket 307, as well as a four-connector audio plug 707 and a three-connector audio plug 717 aligned to show relative positions of connectors 309 to connectors of plugs 707, 717 (depicted in white with insulator portions there between depicted in grey).

In addition, as four-connector audio plugs are generally backwards compatible with three-connector audio sockets, the present five-connector headset 101 is also backwards compatible with three-connector audio sockets.

However, in some implementations of three-connector audio sockets, backwards compatibility of headset 101 is achieved by adapting headset 101 to include a switch which, when actuated, electrically shorts right microphone sleeve connector 109 with ground ring connector 111-2; for example, such a switch can comprise a slider ground switch. This is the case in some in-flight systems with three-connector audio sockets, where the ground connection may be placed in the middle between RING2 and SLEEVE or even only touching SLEEVE. This is incompatible with the North American headset configuration because the ground connector 111-2 will be connected through the microphone path thereby significantly distorting the audio signal. In this case, a reliable ground connection can be obtained by shorting RING2 and SLEEVE, e.g. using a slider switch. In this case, the right microphone will be disabled, but the headset can still function properly as headphones thereby enabling compatibility with an in-flight entertainment system.

In some implementations where headset 101 is used with an in-flight entertainment system, the in-flight entertainment system can be adapted to include an ANC device and/or processor and/or circuit, which can be one or more of: located in a dongle providing an interface to legacy in-flight entertainment systems (which can include a battery and/or a DSP), located inside an armrest, centrally located at in-flight equipment and/or located at a handheld device in communication with an in-flight entertainment system, using a wired or wireless connection.

In some of these implementations, an audio socket at an armrest provides connectivity to a centrally located ANC circuit.

In general, such in-flight entertainment systems can include one ANC device for each seat of an associated airplane. However, in other implementations, a single functional ANC unit can provide the ANC functionality for two or more audio sockets in armrests of airplanes, thereby reducing cost and space, e.g. by providing the processing for a row of closely seats and/or closely located seats.

In some of these implementations, in-flight entertainment systems that includes in-flight ANC support in the armrest, and the like, can include a circuit for automatic headset/headphone detection to determine whether connected headsets have no microphones, one microphone or two microphones, and/or whether or not a connected microphone conforms to a North American standard or a European (or other) standard, for example using the impedance matrix determination method described above. Hence, such a system would identify what type of headset is being connected at an audio socket, and responsively: configure itself for compatibility with the type, and enable ANC when ANC functionality is supported by the headset. In some cases, the system can read memory located in a headset in order to provide additional information about the headset e.g. about the acoustic transfer function between microphone and speaker, for example memory 222 or to provide custom tuning profiles and/or head related transfer (HRF) functions customized for a specific brand and/or information about compatibility to a specific airline in order to provide customized headset solutions.

Indeed, by off-loading ANC features to an audio device that can be mated with a two-microphone audio headset, ANC features can be provided at present implementations of two-microphone audio headsets at reduced cost, as compared to audio headsets where ANC features are provided using a processor at the headset. Furthermore, it would not be necessary to include battery or active circuits in the present headsets which further reduces costs and obviates a need for charging of headsets in in-flight situations, for example before a flight. Furthermore, a battery of such headsets in in-flight situations would not run out, because there aren't any. This could enable providing enhanced in-flight listening even for economy class passengers. Indeed, a single centralized circuit and/or multiple local processing units could provide ANC features to all of the passengers in a flight, rather than issuing and/or selling expensive noise cancellation headsets to each passenger, and requiring these to be charged before the flight in order to be operative.

Those skilled in the art will appreciate that in some implementations, the functionality of device 301 can be implemented using pre-programmed hardware or firmware elements (e.g., application specific integrated circuits (ASICs), electrically erasable programmable read-only memories (EEPROMs), etc.), or other related components. In other implementations, the functionality of device 301 can be achieved using a computing apparatus that has access to a code memory (not depicted) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, the computer-readable program can be stored as a computer program product comprising a computer usable medium. Further, a persistent storage device can comprise the computer readable program code. The computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. An audio headset (101) comprising:
a first microphone (103-1); a second microphone (103-2); a first speaker (105-1); a second speaker (105-2); a ground line (113); and,
an audio plug (107) comprising:
a barrel portion (108) and a tip portion (110), the barrel portion (108) comprising a sleeve connector (109), a first ring connector (111-1) and a second ring connector (111-2),
the tip portion (110) comprising a tip connector (112-1) and a second connector (112-2) located between the tip connector (112-1) and the barrel portion (108),
each connector of the audio plug (107) connected to one of, the first microphone (103-1); the second microphone (103-2); the first speaker (105-1); the second speaker (105-2); and a ground line (113), in a one-to-one relationship.

2. The audio headset (101) of claim 1, wherein the tip connector (112-1) comprises a tip of the audio plug (107).

3. The audio headset (101) of any one of claims 1 to 2, wherein the second connector (112-2) of the tip portion (110) comprises a third ring connector.

4. The audio headset (101) of any one of claims 1 to 3, wherein the audio plug (107) comprises a 3.5 mm audio plug (107) or a 2.5 mm audio plug (107).

5. The audio headset (101) of any one of claims 1 to 4, further comprising at least one input device (114, 115, 116, 117) configured to control one or more: of volume of the first speaker (105-1) and the second speaker (105-2); muting of the first microphone (103-1) and the second microphone (103-2); and a push-to-talk function.

6. The audio headset (101) of any one of claims 1 to 5, further comprising at least one input device (116) configured to short one or more of the first microphone (103-1) and the second microphone (103-2) to the ground line (113) in a playback-in-flight mode.

7. The audio headset (101) of any one of claims 1 to 6, wherein the ground line (113) is shared by each of: the first microphone (103-1); the second microphone (103-2); the first speaker (105-1); and the second speaker (105-2).

8. The audio headset (101) of claim 1, wherein: the sleeve connector (109) is connected to a right microphone; the first ring connector (111-1) is connected to a right speaker; the second ring connector (111-2) is connected to the ground line (113); the tip connector (112-1) is connected to a left microphone; and the second connector (112-2) is connected to a left speaker.

9. The audio headset (101) of claim 1, wherein: the sleeve connector (109) is connected to the ground line (113); the first ring connector (111-1) is connected to the one of the first speaker (105-1) and the second speaker (105-2); the second connector (112-2) is connected to the other of the first speaker (105-1) and the second speaker (105-2); the second connector, located between the tip connector (112-1) and the barrel portion (108), is connected to one of the first microphone (103-1) and the second microphone (103-2); and the tip connector (112-1) is connected to the other of the first microphone (103-1) and the second microphone (103-2).

10. The audio headset (101) of any one of claims 1 to 9, further comprising a memory (222) storing respective acoustic transfer functions between the first microphone (103-1) and a closest one of the first speaker (105-1) and the second speaker (105-2), and the second microphone (103-2) and a respective closest one of the first speaker (105-1) and the second speaker (105-2).

11. The audio headset (101) of claim 10, wherein the memory (222) is accessible via one or more of the connectors of the audio plug (107) such that the respective acoustic transfer functions are stored at the memory from an external device via the audio plug (107).

12. The audio headset (101) of any one of claims 1 to 11, further comprising a memory (222) storing one or more of a respective identification number, a manufacturer type, and intended use and compatibility of the audio headset (101) with equipment associated with a specific airline.

13. A system (300) comprising:
an audio headset (101) comprising: a first microphone (103-1); a second microphone (103-2); a first speaker (105-1); a second speaker (105-2); a ground line (113); and, an audio plug (107) comprising: a barrel portion (108) and a tip portion (110), the barrel portion (108) comprising a sleeve connector (109), a first ring connector (111-1) and a second ring connector (111-2), the tip portion (110) comprising a tip connector (112-1) and a second connector (112-2) located between the tip connector (112-1) and the barrel portion (108), each connector of the audio plug (107) connected to one of: the first microphone (103-1); the second microphone (103-2); the first speaker (105-1); the second speaker (105-2); and a ground line (113), in a one-to-one relationship; and,
a device (301)comprising: a socket (307) configured to receive the audio plug (107), the socket (307) comprising respective connectors (309) configured to respectively connect to the connectors of the audio plug (107); and a digital signal processor ("DSP") (321) configured to one or more of: process a binaural audio received from the first microphone (103-1) and the second microphone (103-2) and converted by a codec; and behave as an active noise cancellation ("ANC") unit to process audio data from the first microphone (103-1) and the second microphone (103-2) to produce a noise cancellation signal, and insert the noise cancellation signal into sound data output to the first speaker (105-1) and the second speaker (105-2).

14. The system (300) of claim 13, wherein the device (301) further comprises a processor (320) configured to determine when the audio plug (107) is received in the socket.

15. The system (300) of any one of claims 13 to 14, wherein the device (301) further comprises a processor (320) configured to: measure one or more impedance values between any two or more of the respective connectors (309) of the socket (307); and determine that the audio plug (107) is received in the socket (307) when the one or more impedances meet a threshold impedance condition.
